Europäisches Patentamt

European Patent Office

Office européen des brevets

(11) Veröffentlichungsnummer: **0 358 883**
**A1**

## EUROPÄISCHE PATENTANMELDUNG

(21) Anmeldenummer: **89112937.1**

(22) Anmeldetag: **14.07.89**

(51) Int. Cl.5: **B25G 1/10 , B25G 1/08**

(30) Priorität: **10.09.88 DE 3830858**
**10.09.88 DE 3830860**

(43) Veröffentlichungstag der Anmeldung:
**21.03.90 Patentblatt 90/12**

(84) Benannte Vertragsstaaten:
**AT CH DE ES FR GB IT LI NL SE**

(71) Anmelder: **Wera-Werk Hermann Werner GmbH & Co.**
**Korzerter Strasse 21**
**D-5600 Wuppertal 12(DE)**

(72) Erfinder: **Lieser, Karl**
**Dornröschenweg 12**
**D-5600 Wuppertal 1(DE)**

(74) Vertreter: **Rieder, Hans-Joachim, Dr. et al**
**Corneliusstrasse 45 Postfach 11 04 51**
**D-5600 Wuppertal 11(DE)**

(54) **Schraubendreher, insbesondere Feinschraubendreher.**

(57) Die Erfindung betrifft einen Schraubendreher, insbesondere Feinschraubendreher, mit einem aus Kunststoff bestehenden Schraubendreherheft, welches aus zwei in Längsrichtung hintereinander angeordneten, in einer einzigen Form gespritzten Heftabschnitten (53, 54) besteht, die im Bereich der sich etwa in der Längsmitte befindlichen Zone größten Durchmessers aneinanderstoßen, und schlägt zur Vermeidung bzw. Erleichterung der Nachbearbeitung bei der Herstellung vor, daß beide Heftabschnitte (53, 54) keine in Längsrichtung liegenden Hinterschneidungen besitzen und das Heft in einer im Bereich des größten Durchmessers quergeteilten Form gespritzt ist.

FIG.2

EP 0 358 883 A1

## Schraubendreher, insbesondere Feinschraubendreher

Die Erfindung betrifft einen Schraubendreher gemäß Gattungsbegriff des Anspruchs 1.

Die bekannten Schraubendreherhefte dieser Art werden in Formen gespritzt, deren Teilungsfuge in Längsrichtung des Heftes verläuft. Nach Entnehmen des gespritzten Werkzeugheftes aus der Form sind die Spritznähte nachzubearbeiten, was sich oftmals als sehr aufwendig erweist. Dieses Nachbearbeiten verlangt dabei viel Geschick, damit nicht unansehnliche Flächen am Schraubendreherheft entstehen. Auch sind keine einfachen Vielfachformen einsetzbar. Sollen Achshöhlungen auftreten, sind komplizierte Formen mit ziehbaren Kernen nötig.

Dem Gegenstand der Erfindung liegt die Aufgabe zugrunde, einen Schraubendreher der in Rede stehenden Art in herstellungstechnisch einfacher Weise so auszugestalten, daß nach Spritzen des Schraubendreherheftes in der geteilten Form eine etwaige Nachbearbeitung erheblich vereinfacht bzw. gar nicht erforderlich ist.

Gelöst wird diese Aufgabe bei einem Schraubendreher der in Rede stehenden Art durch die im Kennzeichen des Anspruchs 1 angegebenen Merkmale.

Die Unteransprüche stellen vorteilhafte Weiterbildungen der erfindungsgemäßen Lösung dar.

Zufolge derartiger Ausgestaltung ist ein gattungsgemäßer Schraubendreher, insbesondere Feinschraubendreher angegeben, dessen Herstellungskosten sich sehr niedrig halten lassen. Dies ist möglich wegen der besonders günstigen Gestaltung des Schraubendreherheftes, welches eine quergeteilte Form zuläßt. Die Teilungsfuge der Form erstreckt sich im Bereich des größten Durchmessers der aneinanderstoßenden Heftabschnitte. Da in Längsrichtung liegende Hinterschneidungen fehlen, können nach dem Spritzvorgang die Formhälften in Längsrichtung der Klinge auseinander bewegt werden. Aufgrund der in Querrichtung des Heftes vorliegenden Teilungsfuge wird eine Nachbearbeitung etwaiger Spritznähte erspart bzw. außerordentlich vereinfacht. Das Abarbeiten eventuell vorliegender Spritznähte kann dabei im Wege des Abdrehens oder Abschleifens in Rotation erfolgen. Überdies ist die Nahtlänge geringer als diejenige bei Formen, die eine Längsteilungsfuge aufweisen. Außerdem kann vor dem Schließen der Form bereits die Klinge zentriert und gehalten sein. Wird sie mit angespritzt, so ist nötig, daß die Werkzeugangriffsspitze nicht den Querschnitt der Klinge überragt, um das Herausziehen aus der Form zu ermöglichen. Es wurde gefunden, daß entsprechende Hefte trotzdem gut den anatomischen Gegebenheiten der Betätigungshand angepaßt sind, insbesondere für Feinschraubtätigkeiten. Letztere sind dadurch charakterisiert, daß über einen großen Anteil des Schraubweges nur geringe Kräfte bzw. Momente eingeleitet werden. Die Betätigung des Schraubendrehers erfolgt hierbei im wesentlichen fingerdynamisch, und zwar in der Weise, daß der Antrieb des klingenseitigen Heftabschnittes durch den Daumen und Zeigefinger und gegebenenfalls noch durch den Mittelfinger erfolgt. Beim Anziehen bzw. Lösen der Schrauben müssen dann kurzzeitig höhere Drehmomente aufgebracht werden, die einen fingerstatischen Zugriff erfordern. Die Betätigungshand gelangt dabei aus dem Zufassungsgriff in den Umfassungsgriff unter Ermöglichung einer größeren Krafteinleitung. Dieser Feinschraubtätigkeit kommt dabei die vollkommen glatte rotationssymmetrische Mantelfläche des Heftes entgegen. Letztere erleich- tert auch das Abarbeiten einer eventuell vorstehenden Spritznaht im Rotationsverfahren. Da sich klingenseitig des als Scheitellinie ausgebildeten Bereichs größten Durchmessers unmittelbar eine querschnittsverjüngende Stufe mit gerundeten Übergängen anschließt, liegt eine eventuelle Spritznaht an einer wenig exponierten Stellung, so daß sie kaum stören würde, wenn sie nicht ganz sauber abgearbeitet wird. Etwaige Abarbeitungstoleranzen würden auch die Griffigkeit des Heftes nicht beeinträchtigen. Die querschnittsverjüngende Stufe schafft ferner ein günstiges Ansetzen der Finger für eine fingerdynamische Mitnahme des Schraubendreherheftes. Zufolge der querschnittsverjüngenden Stufe ist der klingenseitige Heftabschnitt gegenüber dem anderen Heftabschnitt querschnittskleiner gestaltet, was das vorbeschriebene Arbeiten begünstigt. Der klingenabgeandte Heftabschnitt liegt somit günstig in der Innenhand wie in einer Kaverne ein. Dabei kommt die kegelstumpfförmige Gestaltung beider Heftabschnitte vorgeschildertem Vorgang sehr entgegen. Die Querteilungsfuge der Form gestattet ferner die günstige Zuordnung von Achshöhlungen für ein Magazin am Heft zur Aufnahme von Schraubendreher-Einsätzen. Die entsprechenden Magazinaufnahmefächer lassen sich beim Spritzvorgang günstig erzeugen. Nach Auseinanderfahren der Formhälften liegen dann die Magazinaufnahmefächer in konzentrischer Anordnung vor. Ist auch der Klingenschaft hinterschneidungsfrei, kann dieser an das Heft angespritzt werden, anstatt ihn in ein Loch des Hefts einzutreiben. Die Werkzeugspitze wird dann von einem eingesteckten Schraubendrehereinsatz gebildet. Ein solcher Klingenschaft gestattet auch das Aufschieben und Lagern des Drehtellers welcher durch einen mehrkantigen Außenumfang, mit welchem er über den Querschnitt der Stirnfläche vorsteht, verhindert, daß ein Rollen des Schraubendrehers stattfindet, so daß er beispielsweise nicht von einem Arbeitstisch etc. herunterrollt. Der Drehteller verschließt gleichzeitig die Magazinfächer.

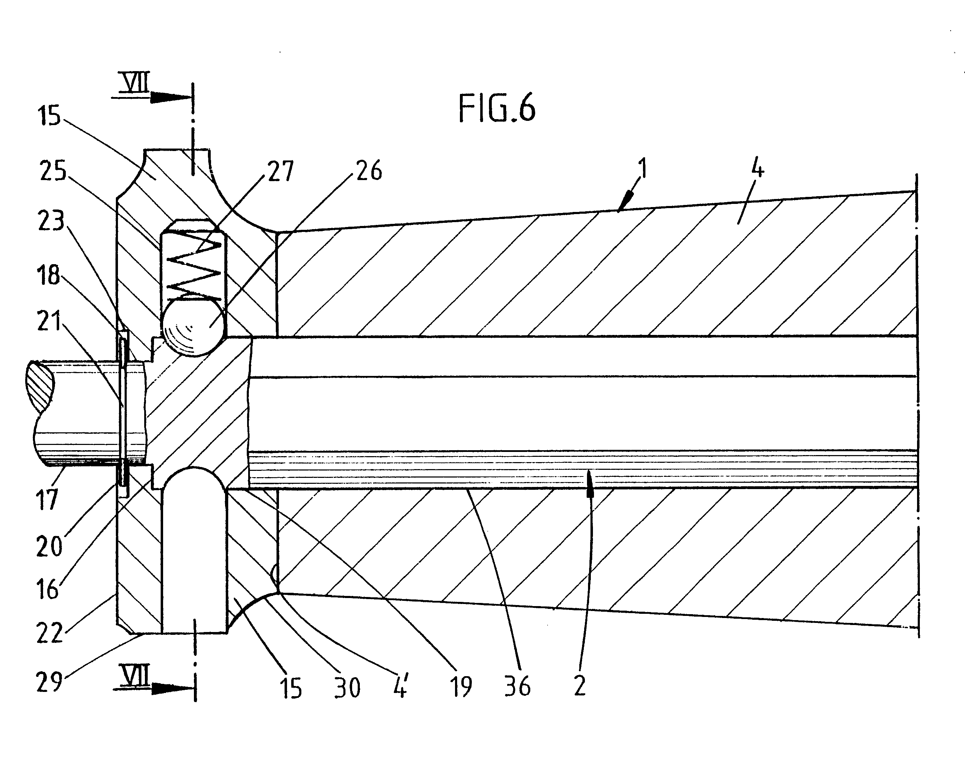

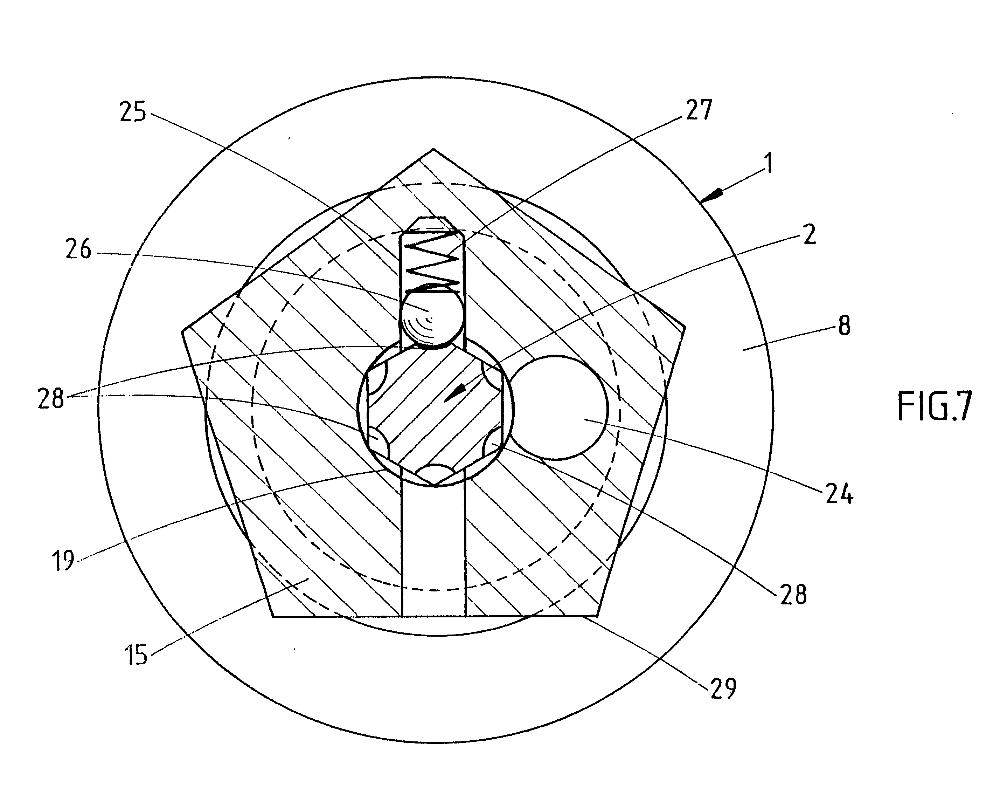

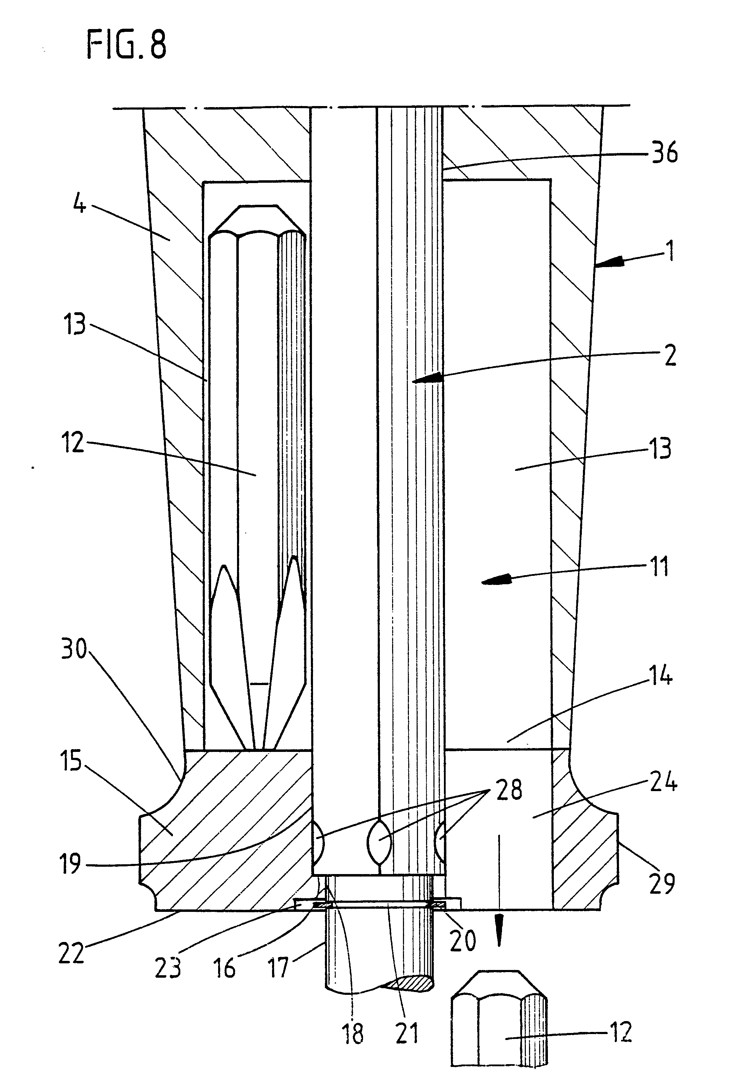

Nachstehend werden zwei Ausführungsbeispiele der Erfindung anhand der Fig. 1 - 11 erläutert. Es zeigt:

Fig. 1 einen Schraubendreher gemäß der ersten Ausführungsform in Ansicht,

Fig. 2 in vergrößerter, schematischer Darstellung das Schraubendreherheft mit in ihm befindlicher Angel in der eine Querteilungsfuge aufweisenden Spritzform zur Herstellung des Schraubendrehers gemäß Fig. 1,

Fig. 3 eine Ansicht eines Schraubendrehers gemäß der zweiten Ausführungsform, dessen Heftabschnitte unter Zwischenschaltung einer Freilaufkupplung in einer Drehfuge aneinanderstoßen,

Fig. 4 eine Unteransicht der Fig. 3, stark vergrößert dargestellt,

Fig. 5 den Schnitt nach der Linie V-V in Fig. 3,

Fig. 6 den Schnitt nach der Linie VI-VI in Fig. 4,

Fig. 7 den Schnitt nach der Linie VII-VII in Fig. 6,

Fig. 8 den Schnitt nach der Linie VIII-VIII in Fig. 4 unter Veranschaulichung des Entnehmens eines Schraubendreher-Einsatzes,

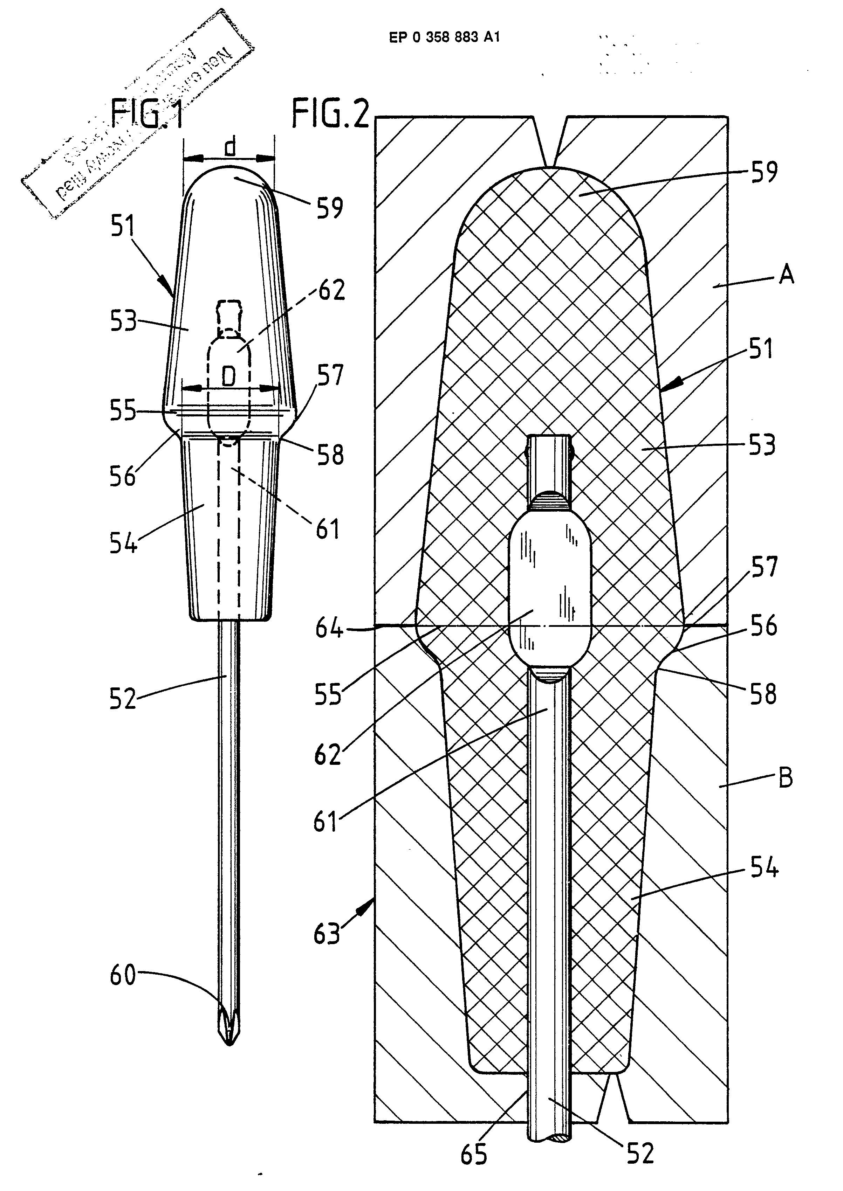

Der Schraubendreher gemäß der in den Figuren 1 und 2 dargestellten, ersten Ausführungsform besitzt ein Heft 51 mit einer von diesem ausgehenden Klinge 52. Das Schraubendreherheft 51 besteht aus Kunststoff und weist zwei in Längsrichtung hintereinander angeordnete Heftabschnitte 53, 54 etwa gleicher Achslänge auf, die im Bereich der sich etwa in der Längsmitte befindlichen Zone größten Durchmessers aneinanderstoßen. Sowohl die Heftabschnitte 53, 54 als auch die Klinge 52 besitzen keine in Längsrichtung liegenden Hinterschneidungen. Es liegt ferner eine vollkommen glatte rotationssymmetrische Mantelfläche des Heftes vor. Klingenseitig des als Scheitellinie 55 ausgebildeten Bereichs größten Durchmessers schließt sich unmittelbar eine querschnittsverjüngende Stufe 56 mit gerundeten Übergängen 57, 58 an. Diese querschnittsverjüngende Stufe 56 besitzt eine kegelstumpfförmige Gestalt. Der Kegelstumpfwinkel beträgt etwa 90° und ist somit um ein Vielfaches größer als derjenige der kegelstumpfförmig gestalteten Heftabschnitte 53, 54. Der kleinste Durchmesser d des der Klinge 52 abgewendeten Heftabschnittes 53 entspricht etwa dem größten Durchmesser D des klingenseitigen Heftabschnittes 54, welcher unmittelbar an der querschnittsverjüngenden Stufe 56 liegt.

Das Kopfende 59 des Heftabschnittes 53 besitzt etwa die Form einer Halbkugel, um eine gute Auflagefläche in der Betätigungshand zu erhalten.

Das Arbeitsende 60 der Klinge 52 ist so gestaltet, daß mit ihm Kreuzschlitzschrauben angezogen bzw. gelöst werden. Zufolge einer hinterschneidungsfreien Gestaltung der Klinge 52 liegen im Bereich des Arbeitsendes 60 keine über die Klingenmantelfläche vorstehenden Vorsprünge vor. Lediglich die Klingenangel 61 ist mit parallel zueinander verlaufenden Abflachungen 62 versehen, um eine undrehbare Anordnung der im Querschnitt kreisförmigen Klinge 52 im Schraubendreherheft 51 zu erhalten. Beim Ausführungsbeispiel erstrekken sich die Abflachungen 62 etwa auf Höhe des Bereichs des größten Durchmessers des Heftes 51.

Die vorbeschriebene Gestaltung des Schraubendrehers läßt es zu, eine zwei Hälften A und B aufweisende Spritzform 63 zu verwenden, deren Teilungsfuge 64 quergerichtet zur Längserstrekkung der Schraubendreherachse verläuft. Die Teilungsfuge 64 liegt dabei auf Höhe der Scheitellinie 55 des Bereichs größten Durchmessers.

Vor dem Spritzvorgang und dem Zusammenfügen der Formenhälften A und B ist die Klinge 51 vorzugsweise unter hängender Zuführung in die Aufnahmeöffnung 65 der Hälfte B einzustekken. Die Einsetzbewegung wird durch einen nicht dargestellten Anschlag begrenzt, gegen welchen das Arbeitsende der Klinge 51 stößt. Auf diese Weise erhält die Klinge 52 eine Zentrierung innerhalb der Hälfte B. Anschließend ist die andere Spritzformhälfte A in die Schließstellung zu bringen, so daß anschließend der Spritzvorgang erfolgen kann. Nach dem Auseinandernehmen der Form liegt eine Spritznaht auf Höhe der Scheitellinie 55 vor, welche aber, da sie an einer wenig exponierten Stellung liegt, keiner oder nur einer geringen Nachbearbeitung bedarf.

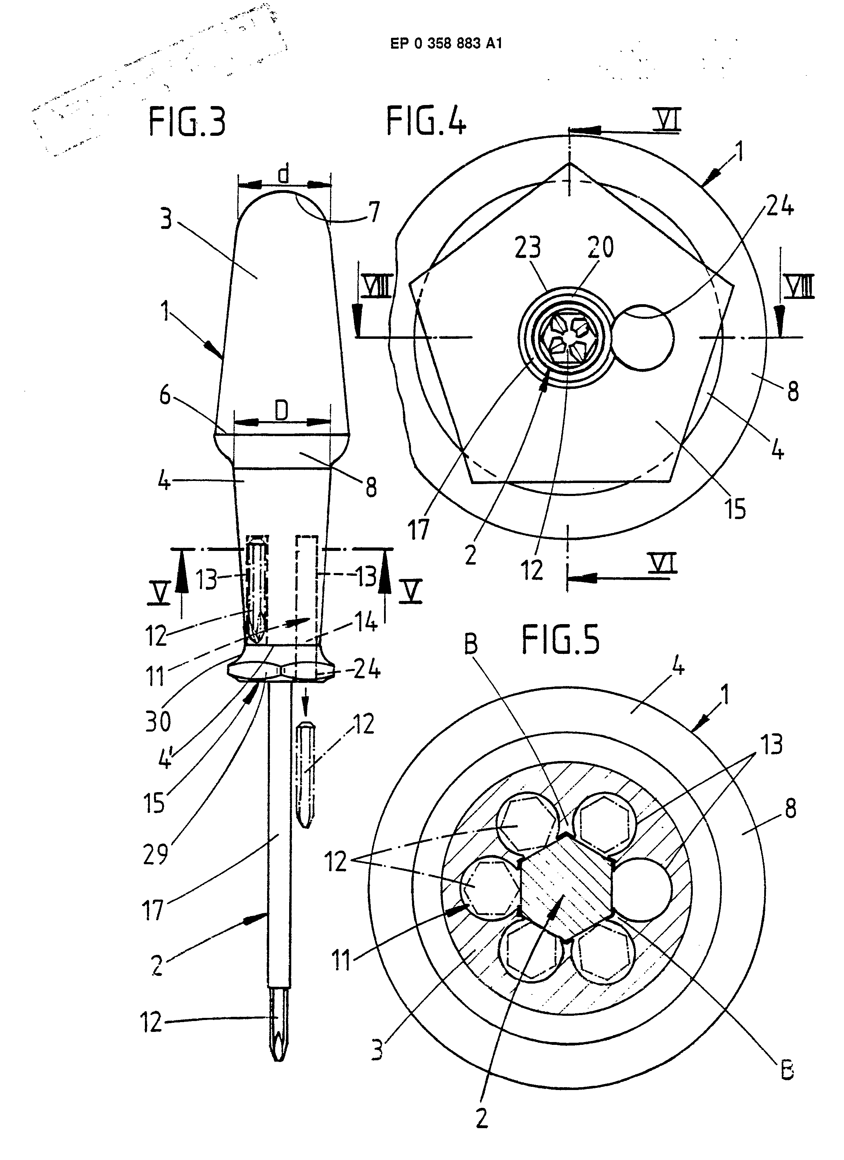

Insbesondere Fig. 3 veranschaulicht, daß sich die Heftabschnitte 3, 4, ausgehend vom größten Heftquerschnitt, hinterschneidungsfrei verjüngen derart, daß der größte Durchmesser D des klingenseitigen Heftabschnittes 4 etwa dem kleinsten endseitigen Durchmesser d des kopfseitigen Heftabschnittes 3 entspricht. Das Kopfende 7 des Heftabschnittes 3 besitzt etwa die Form einer Halbkugel, um eine gute Auflagefläche in der Betätigungshand zu erhalten. Bedingt durch die Kegelstumpfform der Heftabschnitte 3, 4 ist es möglich, die entsprechenden Kunststoffspritzformen ohne Längsteilungsfuge zu erstellen.

Zwischen den beiden Heftabschnitten 3, 4 ist eine Ringzone 8 vorgesehen, die eine Verjüngungsstufe zwischen beiden Heftabschnitten bildet. Der Kegelstumpfwinkel dieser Verjüngungsstufe entspricht etwa 45° und ist somit um ein Vielfaches größer als der der Heftabschnitte 3, 4. Demgemäß befindet sich der Ring 8 in einer Verstecklage zwischen beiden Heftabschnitten. Der Übergang zu den Heftabschnitten 3, 4 erfolgt über entsprechende Radien 9, 10 unter Vermeidung störender Vorsprünge.

Der klingenseitige Heftabschnitt 4 beinhaltet ein Magazin 11 zur Aufnahme von Schraubendreher-Einsätzen 12. Das Magazin 11 weist sechs in gleicher Umfangverteilung angeordnete, in Achsrichtung weisende Magazinaufnahmefächer 13 in Form von Sackaussparungen auf, deren Mündungsöffnungen 14 stirnseitig des Heftabschnittes 4 ein Drehteller 15 zugeordnet ist. Letzterer liegt unmittelbar vor der klingenseitigen Stirnseite 4' des Heftabschnittes 4 und lagert drehbar auf dem Klingenschaft 2. Eine Lagerung erhält der Drehteller 15 dadurch, daß der im Querschnitt sechskantförmige Klingenschaft 2 unter Bildung einer Stufe 16 in einen kreiszylindrischen Abschnitt 17 übergeht. Der Drehteller 15 besitzt dementsprechend zentral eine Lagerbohrung 18, welche von dem kreiszylindrischen Abschnitt 17 durchsetzt wird. An die Lagerbohrung 18 schließt sich eine gegenüber dieser querschnittsgrößere Lageröffnung 19 an. Deren Durchmesser ist so groß wie das Eckmaß des Klingenschaftes 2. Die Länge der Lageröffnung 19 entspricht einem Mehrfachen derjenigen der Lagerbohrung 18. Durch die Stufe 16 erhält der Drehteller 15 eine Anschlagbegrenzung in Richtung des Heftes 1. Das Abziehen des Drehtellers 15 vom Abschnitt 17 ist durch einen Sicherungsring 20 verhindert, der in einer Ringnut 21 des kreiszylindrischen Abschnittes 17 einliegt. Zur Aufnahme des Sicherungsringes 20 bildet der Drehteller 15 an seiner unteren Stirnseite 22 eine Aussparung 23 aus. Der Drehteller 15 ist in sechs Drehstellungen verrastbar, in welchen sein Durchbruch 24 mit einem der Magazinaufnahmefächer 13 fluchtet. Zur Verrastung dient eine in einer Radialbohrung 25 des Drehtellers 15 untergebrachte Rastkugel 26. Eine Druckfeder 27 belastet die Rastkugel 26 in Einwärtsrichtung. Letztere wirkt zusammen mit Rastvertiefungen 28, die in gleicher Querschnittsebene auf Höhe der Kanten des Klingenschaftmehrkantes vorgesehen sind.

Der Drehteller 15 ist so beschaffen, daß er einen mehrkantigen Außenumfang 29 besitzt. Dieser ist in Form eines Fünfecks gestaltet und steht über den Querschnitt der Stirnfläche 4' des klingenseitigen Heftabschnittes 4 vor. Als Übergang zwischen dem Fünfeck und der Stirnfläche 4' dient eine ringsumlaufende Ringzone 30 des Drehtellers 15, die stufenlos in den Heftabschnitt 4 übergeht. Diese Ringzone 30 kann zudem noch eine weitere Funktion übernehmen, indem sie das Abrutschen der entsprechenden Finger der Betätigungshand in Richtung der Klinge verhindert.

Der kreiszylindrische Abschnitt 17 ist an seinem Ende mit einer nicht veranschaulichten Aufnahmeöffnung zum Einstecken eines Schraubendrehereinsatzes 12 ausgestattet.

Das Entnehmen eines Schraubendreher-Einsatzes kann im Zufassungsgriff geschehen. Die Fünfeckform des Drehtellers ermöglicht ein erleichtertes Verdrehen desselben mittels des Zeigefingers der Zufassungshand in eine solche Stellung, in welcher der zu entnehmende Schraubendreher-Einsatz bzw. dessen Magazinaufnahmefach mit dem Durchbruch 24 des Drehtellers fluchtet. Dann rutscht der Schraubendreher-Einsatz 12 heraus und kann in die Gebrauchsstellung gebracht werden. Ein Verschließen des jeweiligen Magazinaufnahmefaches ist nicht erforderlich, da sich dann in diesem kein Schraubendreher-Einsatz befindet.

## Ansprüche

1. Schraubendreher, insbesondere Feinschraubendreher, mit einem aus Kunststoff bestehenden Schraubendreherheft, welches aus zwei in Längsrichtung hintereinander angeordneten, in einer einzigen Form gespritzten Heftabschnitten besteht, die im Bereich der sich etwa in der Längsmitte befindlichen Zone größten Durchmessers aneinanderstoßen, dadurch gekennzeichnet, daß beide Heftabschnitte (3,4 bzw. 53, 54) keine in Längsrichtung liegenden Hinterschneidungen besitzen und das Heft in einer im Bereich des größten Durchmessers quergeteilten Form gespritzt ist.

2. Schraubendreher, insbesondere nach Anspruch 1, dadurch gekennzeichnet, daß beide Heftabschnitte vollkommen glatte rotationssymmetrische Mantelflächen besitzen.

3. Schraubendreher, insbesondere nach einem oder mehreren der vorhergehenden Ansprüche, dadurch gekennzeichnet, daß sich klingenseitig des als Scheitellinie (55) ausgebildeten Bereichs größten Durchmessers unmittelbar eine querschnittsverjüngende Stufe (56) mit gerundeten Übergängen (57, 58) anschließt.

4. Schraubendreher, insbesondere nach einem oder mehreren der vorhergehenden Ansprüche, dadurch gekennzeichnet, daß beide Heftabschnitte (3, 4, 53, 54) kegelstumpfförmig gestaltet sind und der kleinste Durchmesser (d) des der Klinge abgewendeten Abschnittes (3, 53) etwa dem größten Durchmesser (D) des klingenseitigen Heftabschnittes (4, 54) entspricht, liegend unmittelbar an der querschnittsverjüngenden Stufe (8, 56).

5. Schraubendreher, insbesondere nach einem oder mehreren der vorhergehenden Ansprüche, dadurch gekennzeichnet, daß auch der Klingenschaft hinterschniedungsfrei gestaltet ist.

6. Schraubendreher, nach Anspruch 5, dadurch gekennzeichnet, daß der Klingenschaft eine Mehrkanthöhlung für einen Schraubendrehereinsatz besitzt.

7. Schraubendreher, insbesondere nach einem oder mehreren der vorhergehenden Ansprüche, dadurch gekennzeichnet, daß vor der Stirnfläche (4') des klingenseitigen Heftabschnittes (4) ein auf dem Klingenschaft (2) drehbar gelagerter Mehrkant-Teller (15) angeordnet ist, der über den Querschnitt der Stirnfläche (4') vorsteht.

FIG.1    FIG.2

FIG.3  FIG.4

FIG.5

FIG.6

15
25
23
18
21
17
20
16
22
29

VII

27    26

1    4

15    30    4'    19    36    2

VII

EP 0 358 883 A1

FIG.7

FIG.8

| | **EINSCHLÄGIGE DOKUMENTE** | | EP 89112937.1 | |
| --- | --- | --- | --- | --- |
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ℵ5 | |
| Y | <u>DE - A1 - 2 905 163</u><br>(FELO WERKZEUGFABRIK<br>FRIEDRICH W. HOLLAND LETZ KG)<br>  * Seite 3, Absatz 4; Fig.<br>    1,2 *<br>    -- | 1 | B 25 G   1/10<br>B 25 G   1/08 | |
| Y | <u>GB - A - 2 137 545</u><br>(GOO-TON LIN)<br>  * Seite 1, Zeilen 81-83;<br>    Fig. 1 *<br>    -- | 1 | | |
| A | <u>GB - A - 2 017 560</u><br>(PATRICE PERSONNAT)<br>  * Seite 1, Zeilen 121-127;<br>    Fig. 5 *<br>    -- | 6 | | |
| X | <u>US - A - 4 278 119</u><br>(ELMORE)<br>  * Anspruch 1; Fig. 1-3 *<br>    ---- | 7 | | |
| | | | RECHERCHIERTE SACHGEBIETE (Int. Cl. ℵ5 | |
| | | |  B 25 G   1/00<br>B 25 G   3/00<br>B 25 B 15/00<br>B 25 B 23/00<br>B 25 F   5/00 | |

Der vorliegende Recherchenbericht wurde für alle Patentansprüche erstellt.

| Recherchenort | Abschlußdatum der Recherche | Prüfer |
| --- | --- | --- |
| WIEN | 23-10-1989 | BISTRICH |